# EUROPÄISCHE PATENTSCHRIFT

(11) **EP 0 370 183 B1**
(45) Veröffentlichungstag und Bekanntmachung des Hinweises auf die Patenterteilung: **17.03.1993**
(21) Anmeldenummer: 89115991.5
(22) Anmeldetag: 30.08.1989
(51) Int. Cl.: B23K 9/02, B23K 37/00, E21B 7/24

(54) **Verfahren zum Verschweissen eines im Erdreich liegenden Rohrstranges mit einem Folgerohr**
Procedure for welding an underground pipeline conduit to a following pipe
Procédé pour souder une ligne de tubes souterrain sur un tuyau suivant

(30) Priorität: 24.11.1988 DE 3839633
(43) Veröffentlichungstag der Anmeldung: 30.05.1990
(73) Patentinhaber: Schmidt, Paul, Dipl.-Ing., D-57368 Lennestadt (DE)
(72) Erfinder: Püttmann, Franz-Josef, D-5940 Lennestadt 1 (DE)
(74) Vertreter: König, Reimar, Dr.-Ing.

(56) Entgegenhaltungen:
- EP-A- 0 182 551
- DE-A- 2 166 743
- DE-A- 3 129 722
- FR-A- 1 084 727

## Beschreibung

Die Erfindung betrifft ein Verfahren zum Verschweißen eines in das Erdreich vorgetriebenen Rohrstranges mit einem Folgerohr.

Das Einrammen von Stahlrohren, wie beispielsweise Schutz- oder Leitungsrohren, mit Hilfe eines Rammbohrgerätes oder einer Ramme, deren konische Schlagspitze direkt oder mittels eines Rammaufsatzes in das rückwärtige Ende eines auf Lagerböcken geführten Rohres mit einem das vordere Ende nach innen und außen übergreifenden Schneidschuh eingreift, hat sich in zunehmendem Maße in die Praxis eingeführt. In den meisten Fällen wird dabei nicht die volle Rohrlänge in einem Stück vorgetrieben, sondern es werden - je nach Größe der zur Vorbereitung des Einrammens zur Verfügung stehenden Startgrube - kurze Rohrstöße nach und nach vorgetrieben. Das erfordert ein entsprechend häufiges Verbinden des bereits im Erdreich liegenden Rohres bzw. aus mehreren Rohrstößen bestehenden Rohrstranges durch Verschweißen mit dem Folgerohr bis zur Fertiglänge.

Dieses Wechselspiel wiederholt sich bis die volle Stranglänge erreicht ist. Als problematisch hat sich dabei das Verschweißen der einzelnen Rohrstöße herausgestellt. Diese müssen nämlich in der Startgrube am vollen Umfang dicht und schlagfest miteinander verschweißt werden. Das Verschweißen erfordert somit insbesondere auch deshalb qualifizierte Rohrleitungsschweißer, weil die Rohrstöße auch an ihrer Unterseite mit gleichbleibender Qualität verschweißt werden müssen. Um das Verschweißen an der Unterseite zumindest unter verbesserten Bedingungen durchführen zu können, wird die Startgrube in diesem Bereich tiefer ausgeschachtet. Da die Schweißstelle unter dem Rohr dennoch nicht direkt einzusehen ist, setzt das Verschweißen zudem die Verwendung eines Schweißspiegels voraus.

Der Erfindung liegt die Aufgabe zugrunde, ein Verfahren zu schaffen, mit dem sich die vorgenannten Nachteile vermeiden lassen und das Verschweißen eines im Erdreich liegenden Rohrstranges mit einem Folgerohr erleichtert wird.

Erfindungsgemäß wird diese Aufgabe dadurch gelöst, daß der im Erdreich liegende horizontale Rohrstrang und das Folgerohr gedreht werden. Mit dieser überraschend einfachen Maßnahme, den im Erdreich liegenden und mit seinem freien Ende ca. 0,5 m aus dem Erdreich hervorragenden Rohrstrang beim Schweißen, gegebenenfalls kontinuierlich, um seine Längsachse zu drehen, ergibt sich für den Schweißer der große Vorteil, daß keine komplizierten Fall- und Überkopfnähte mehr erforderlich sind. Hinzu kommt, daß der Schweißer die Arbeiten in der ihm angenehmsten Position durchführen kann. Ein Drehen des Rohrstranges um seine Längsachse ist ohne weiteres möglich, wenn das Folgerohr an mehreren umfangsverteilten Stellen an den im Erdreich liegenden Rohrstrang angeheftet ist.

Das Drehen läßt sich vorteilhaft mittels eines an das vorkragende Ende des Rohrstranges angesetzten Kettenschlüssels, d.h. manuell erreichen. Der erforderliche Kraftaufwand wird dabei durch einen langen Hebel eines ansonsten handelsüblichen Kettenschlüssels verringert.

Alternativ kann der Rohrstrang automatisch gedreht werden. Zu diesem Zweck eignet sich beispielsweise ein druckmittelbetriebener Zylinder, der den Rohrstrang hubweise nachgreifend dreht.

Es empfiehlt sich, daß während des Drehens Vibrationen in den Rohrstrang eingebracht werden. Die Haftreibungen zwischen der Rohraußenwandung und dem Erdreich lassen sich auf diese Weise verringern bzw. überwinden und somit insbesondere das Drehen eines bereits sehr weit in das Erdreich eingetriebenen Rohrstranges vereinfachen. Diese unterstützenden Vibrationen lassen sich beispielsweise mit dem auf der Baustelle ohnehin vorhandenen Rammbohrgerät bzw. der Ramme erzielen. Das Rotieren des Rohrstranges läßt sich vorteilhaft dazu ausnutzen, das Folgerohr mit dem Rohrstrang maschinell zu verschweißen. Im Zusammenspiel mit einer automatischen Dreheinrichtung läßt sich somit ein vollautomatischer Ablauf beim Verschweißen erreichen.

Die Erfindung wird nachfolgend anhand eines in der Zeichnung dargestellten Ausführungsbeispiels des näheren erläutert. In der Zeichnung zeigen:
Fig. 1 in einer Startgrube eine zum horizontalen Einrammen eines Rohres in das rückwärtige Ende eines Vortriebsrohres eingreifende Ramme, unmittelbar nach dem Beginn des Vortriebs;
Fig. 2 eine - abweichend von Fig. 1 - in einem Rohr angeordnete Ramme, und nach dem Ansetzen eines Folgerohres an einen nahezu völlig in das Erdreich vorgetriebenen Rohrstrang;
Fig. 3 einen die Startgrube und eine Zielgrube verbindenden Rohrstrang, schematisch dargestellt;
Fig. 4 als Ausschnitt eine vergrößerte Darstellung im Bereich der in Fig. 2 durch eine strichpunktierte Linie gekennzeichneten Verbindungsstelle beim Ansetzen eines Folgerohres an ein gemäß Fig. 2 bereits in das Erdreich eingetriebenes Rohr;
Fig. 5 einen zum manuellen Drehen eines Rohrstranges mit seiner Kette das vordere Ende eines Rohres umschlingenden Kettenschlüssel; und
Fig. 6 einen zum automatischen Drehen eines Rohrstranges mit einem Kettenschlüssel gemäß Fig. 5 verbundenen nachgreifenden Zylinder.

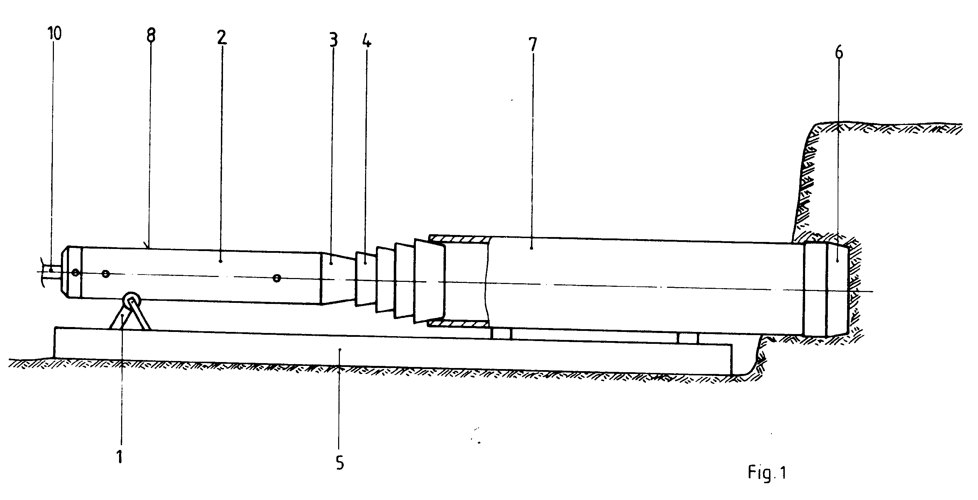

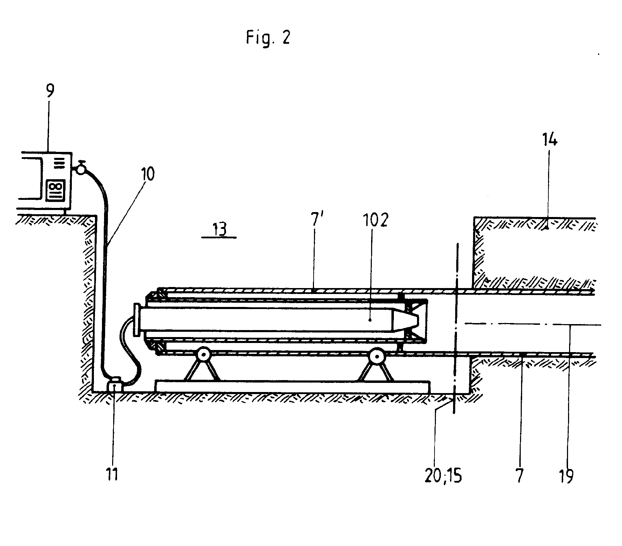

Beim horizontalen Rammen gemäß Fig. 1 greift eine auf einem Lagerbock 1 geführte Ramme 2 mit ihrem Schlagkopf 3 über ein Zwischenstück 4 in das rückwärtige Ende eines auf einem als I-Träger 5 ausgebildeten Auflager geführten und am vorderen Ende mit einem Schneidschuh 6 versehenen Rohres 7 ein. Ein nicht dargestellter, im Inneren des Gehäuses 8 der Ramme 2 axial hin- und herbewegter Schlagkolben überträgt seine Schubkraft auf das Gehäuse 8 bzw. den Schlagkopf 3 sowie das Zwischenstück 4 und treibt mit jedem Hub das Rohr 7 weiter in das Erdreich hinein. Der Schlagkolben wird mittels Druckluft beaufschlagt, die von einem Kompressor 9 (vgl. Fig.2) über einen Druckmittelanschluß 10 mit integriertem Luftöler 11 (vgl. Fig. 2) in das Gehäuseinnere der Ramme 2 eingeleitet wird.

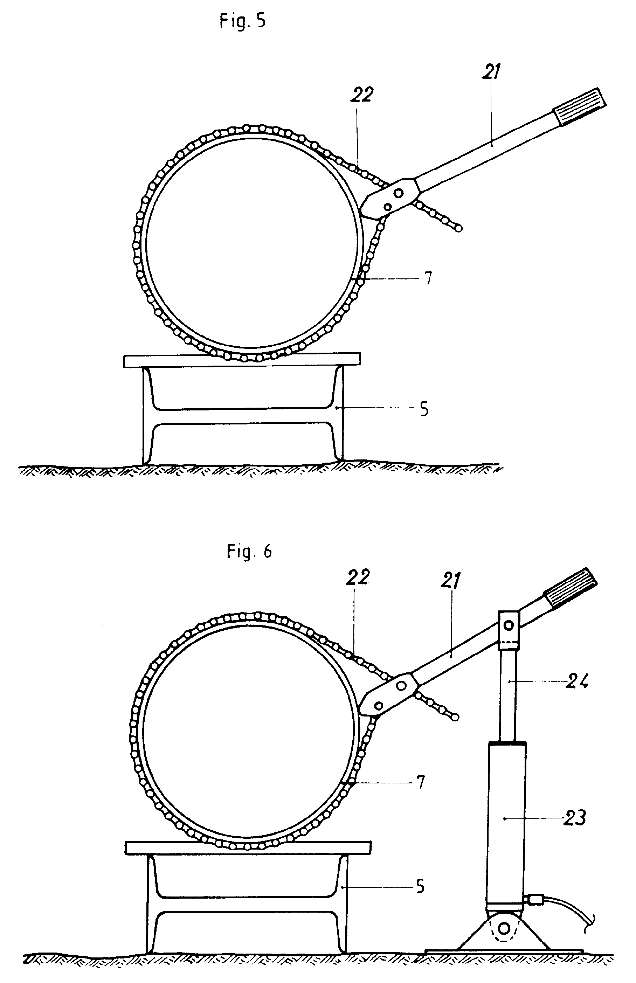

Gegenüber der Anordnung gemäß Fig. 1 greift die Ramme bzw. das Rammbohrgerät 102 nicht in das rückwärtige Ende eines Rohres ein, sondern ist im Rohr angeordnet, wodurch sich eine kürzere Startgrube 13 als bei der Ausführung gemäß Fig. 1 erreichen läßt. In Fig. 2 ist das fast völlig in das Erdreich 14 eingerammte Rohr 7 (vgl. Fig. 1) sowie das Ansetzen eines neuen, d.h. Folgerohres 7′ dargestellt. Wie im einzelnen in Fig. 4 dargestellt, werden die Stirnflächen des Folgerohres 7′ und des noch mit einem Teilstück aus dem Erdreich 14 vorkragenden Rohres bzw. Rohrstranges 7 durch eine Schweißnaht 15 miteinander verbunden; zur Verstärkung der Schweißnaht 15 sind, beispielsweise an vier Stellen umfangsverteilt, Stahlbleche 16 mit Heftnähten 17 angeschweißt.

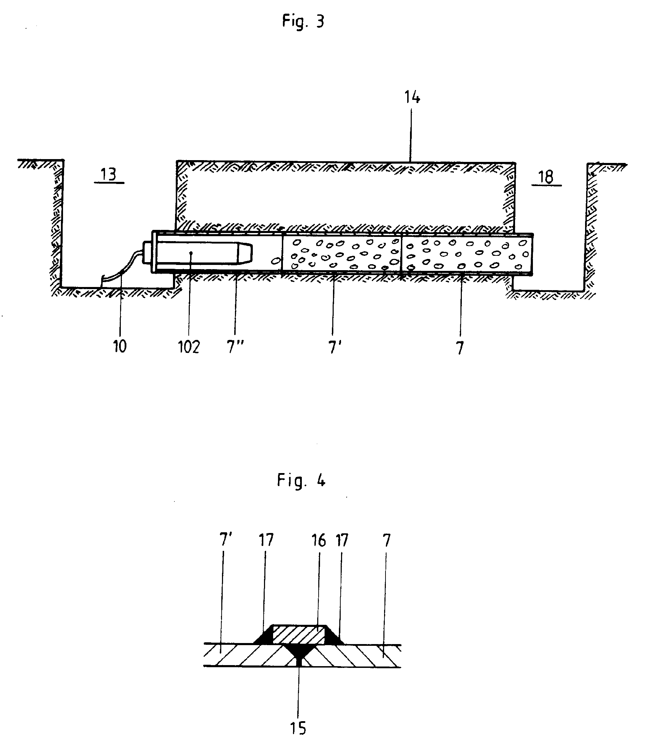

Auf diese Weise werden so viele Rohre bzw. Rohrstöße 7, 7′, 7˝ angesetzt, wie nötig sind, um eine Rohrverbindung von der Startgrube 13 bis zu einer Zielgrube 18 herzustellen (vgl. Fig. 3). Jeweils zum Verschweißen eines neuen, d.h. eines sich dem bereits eingetriebenen Rohres 7 anschließenden Folgerohres 7′, 7˝ usw. wird das im Erdreich liegende Rohr 7 bzw. der bereits aus mehreren Rohrstößen bestehende Rohrstrang um seine Längsachse 19 entweder im Uhrzeigersinn oder entgegen dem Uhrzeigersinn gedreht. Während des Drehens wird das bereits im Erdreich 14 liegende Rohr 7 mit dem Folgerohr 7′ entlang der in Fig. 2 strichpunktiert dargestellten, umlaufenden Verbindungsstelle 20 verschweißt. Wie in Fig. 5 dargestellt ist, wird das im Erdreich liegende Rohr 7 manuell mittels eines Kettenschlüssels 21 gedreht; die Kette 22 des Schlüssels 21 umschlingt das aus dem Erdreich vorkragende Ende des Rohres 7. Mit der Ausführung gemäß Fig. 6 ist ein automatisches Drehen des Rohres 7 möglich, und zwar ist in diesem Fall ein umsteuerbarer, nachgreifender Zylinder 23 mit seiner Kolbenstange 24 am Kettenschlüssel 21 befestigt. Unabhängig davon, ob die Rohre 7, 7′ usw. maschinell oder manuell miteinander verschweißt werden, läßt sich die umlaufende Schweißnaht 15 stets in einer günstigen, komplizierte Fall- und/oder Überkopfnähte vermeidenden Position anbringen.

## Patentansprüche

1. Verfahren zum Verschweißen eines horizontal in das Erdreich (14) vorgetriebenen Rohrstranges (7) mit einem Folgerohr, (7′) dadurch gekennzeichnet, daß der im Erdreich (14) liegende Rohrstrang (7) und das Folgerohr (7′) gedreht werden.

2. Verfahren nach Anspruch 1, dadurch gekennzeichnet, daß der Rohrstrang (7) mittels eines Kettenschlüssels (21) gedreht wird.

3. Verfahren nach Anspruch 1, dadurch gekennzeichnet, daß der Rohrstrang (7) automatisch gedreht wird.

4. Verfahren nach einem oder mehreren der Ansprüche 1 bis 3, dadurch gekennzeichnet, daß Vibrationen in den Rohrstrang (7) eingebracht werden.

## Claims

1. A process for welding a follower pipe (7′) to a pipe string (7) driven horizontally into the ground (14), characterised in that the pipe string (7) buried in the ground (14) and the follower pipe (7′) are rotated.

2. A process according to claim 1, characterised in that the pipe string (7) is rotated by means of a chain wrench (21).

3. A process according to claim 1, characterised in that the pipe string (7) is rotated automatically.

4. A process according to one or more of claims 1 to 3, characterised in that vibrations are introduced into the pipe string (7).

## Revendications

1. Procédé pour souder une ligne de tubes (7) enfoncés horizontalement dans le sol (14) à un tube (7′) placé à la suite, caractérisé en ce que la ligne de tubes (7) engagés dans le sol (14) et le tube suivant (7′) sont soumis à une rotation.

2. Procédé selon la revendication 1, caractérisé en ce que la rotation de la ligne de tubes (7) est obtenue au moyen d'une clé de chaîne (21).

3. Procédé selon la revendication 1, caractérisé en ce que la rotation de la ligne de tubes (7) s'effectue automatiquement.

4. Procédé selon une ou plusieurs des revendications 1 à 3, caractérisé en ce que la ligne de tubes (7 ) est soumise à des vibrations.
